# EUROPEAN PATENT SPECIFICATION

(11) **EP 0 456 155 B1**
(45) Date of publication and mention of the grant of the patent: **28.12.1994**
(21) Application number: 91107310.4
(22) Date of filing: 06.05.1991
(51) Int. Cl.: B65B 19/34, B65G 47/44, B65G 47/53

(54) **Sausage link handling and packaging machine**
Wursthandhabungs- und Verpackungsmaschine
Machine d'emballage et de manipulation de saucisses en chapelets

(30) Priority: 07.05.1990 CA 2016160
(43) Date of publication of application: 13.11.1991
(73) Proprietor: INDUSTRIES D.M.P. INC., Chomedey Laval, Quebec H7L 3P4 (CA)
(72) Inventor: Michaud, Ghislain, Laval, Québec (CA); Presseau, Michel, Laval, Québec (CA); Drolet, Roger, Mascouche, Québec (CA)
(74) Representative: Casalonga, Axel

(56) References cited:
- EP-A- 0 230 795
- CA-A- 1 093 036
- US-A- 2 948 093
- US-A- 3 316 103

## Description

The present invention relates to a sausage link handling and packaging machine whereby predetermined quantities of sausage links are aligned in groups and transferred on a support element which is used to package the sausage links.

A common method of packaging sausage links in the trade is to provide a long conveyor on which sausage links are deposited at one end and then picked up at several locations along the long conveyor by people so as to position predetermined quantities of sausage links into a box or on a tray which is to be wrapped by a plastic film material. A disadvantage of such method and apparatus is that it is labor-intensive, it is subject to human errors, and requires added sanitary precautions due to the handling of the foodstuff by the packaging people. Another disadvantage of these prior art devices is that many of the sausages become damaged by dumping them in a random fashion at a receiving end of the conveyor. These sausages usually consist of soft meat packaged within a transparent fragile film-like tube, with the ends of the tubes being only partly closed. Therefore, if the sausage link is squeezed during handling, the foodstuff can escape from the end of the tubes and this results in a messy package being formed or creates a messy and unsanitary conveying surface.

EP-A-0 230 795 discloses a sausage link handling and packaging machine which comprises a feed conveyor for transferring the sausage links onto a main conveyor, guide means comprised of side deflector plates and a stopper to orient the sausage links on an ejecting path and to stop the movement of the sausage links in the ejecting direction transverse to the main conveyor, transfer means for transferring transversely aligned sausage links off said main conveyor onto a package support means, and means to further convey the package support means.

It is therefore a feature of the present invention to provide a sausage link handling and packaging machine which substantially overcomes the above-mentioned disadvantages of the prior art.

Another feature of the present invention is to provide a sausage link handling and packaging machine wherein the sausage links are automatically fed to a receiving end of a main conveyor and automatically oriented in alignment and in side-by-side relationship by a deflector and stopper plate arrangement and then conveyed along a predetermined path and further wherein a predetermined number of these sausage links are transferred onto a package support element.

Another feature of the present invention is to provide a sausage link handling and packaging machine wherein sausage links are disposed in predetermined groups with the groups spaced apart along a main conveyor whereby individual groups are transferred onto a package support element.

According to the above features, from a broad aspect, the present invention provides a sausage link handling and packaging machine which is comprised of a feed conveyor for receiving individual sausage links from a link forming machine. The feed conveyor transfers the sausage links onto a main conveyor. Guide means is associated with the transfer conveyor to orient the sausage links on an ejecting path. An alignment means is comprised of a stopper plate for stopping the movement of the sausage links in the ejecting direction. Said alignment means is provided at the receiving end of the main conveyor for orienting the sausage links in a side-by-side transverse aligned relationship on the main conveyor. Transfer means is provided at a transfer station of the main conveyor for transferring a predetermined number of the transversely aligned sausage links off the main conveyor and onto package support means. Means is further provided to convey the package support means with the sausages thereon downstream of the transfer station.

The machine is characterized in that the alignment means comprises a side deflector plate positioned in said ejecting path and having a sloped deflecting surface sloping toward the direction of travel of a conveyor belt of said main conveyor, and in that the stopper plate is positioned adjacent said deflector plate at predetermined angle to cause said sausage links to align themselves in said side-by-side relationship and is angled toward said ejection path to deflect and guide a front end of said sausages ejected on said deflector plate downwards toward said conveyor belt.

A preferred embodiment of the present invention will now be described with reference to the accompanying drawings in which:
FIGURE 1 is a fragmented perspective view showing the position of the feed conveyor with respect to the main conveyor and the ejection and orientation of the sausage links for later packaging;
FIGURE 2 is a top view showing a portion of the sausage link handling and packaging machine of the present invention
FIGURE 3 is a top view similar to Figure 2 but showing the orientation of the sausage links on the main conveyor as well as on a package support element, herein a box or a tray;
FIGURE 4 is a view similar to Figure 3 but showing the transfer pusher plate and piston;
FIGURE 5 is a side view showing an embodiment of means to handle the package support elements on which a predetermined number of sausage links are positioned: and
FIGURE 6 is a top view showing an arrangement as illustrated in Figure 5.

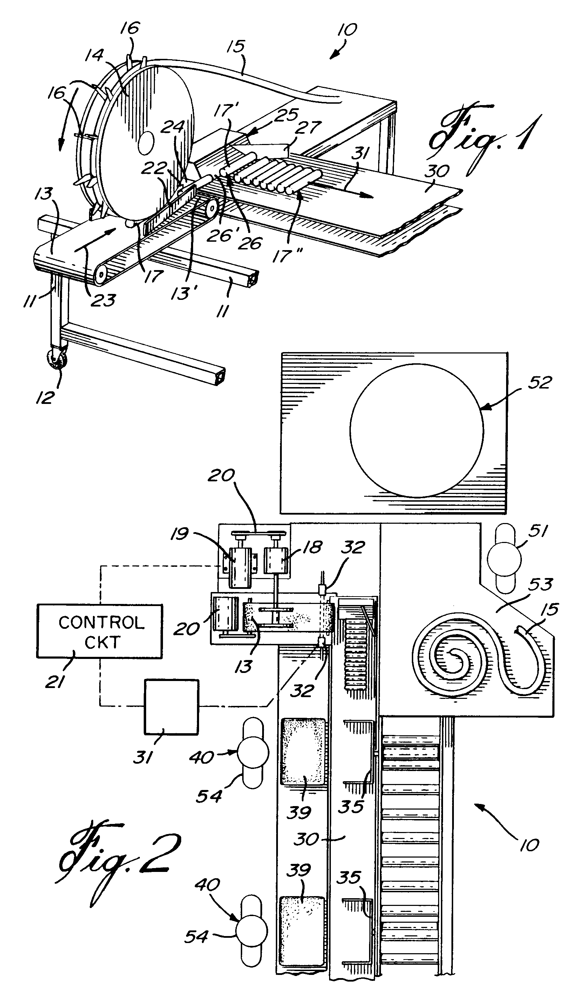

Referring now to the drawings, and more particularly to Figures 1 and 2, there is shown generally at 10, the sausage link handling and packaging machine of the present invention. As herein shown, the machine is mounted on a displaceable frame 11 which is supported on casters 12 which are arrested by suitable brake means, well known in the art. The machine 10 comprises a feed conveyor 13 which is positioned under a sausage link forming machine 14 of a type well known in the art. An elongated casing 15 into which soft meat has been inserted is fed to the link forming machine and clasped between pairs of clasping and shearing elements 16 which form individual sausage links 17 which are severed and dropped under the link forming machine 14 and onto the feed conveyor 13. The link forming machine is well known in the art.

As shown in Figure 2, the link forming machine 14 is provided with a drive gear box 18 driven by a motor 19 through a belt coupling 20. A further motor 20 drives the feed conveyor 13. A control circuit 21 is provided to control the speed of rotation of the link forming machine 14 and the speed of the feed conveyor which is driven at a higher speed than the link forming machine.

At the outlet end 13' of the feed conveyor, there is provided a pair of angled guide plates 22 supported above the feed conveyor for orienting the sausage links axially with respect to the conveying direction, as indicated by arrow 23, and along an ejection path which is aligned with the mouth opening 24 of the guide plates 22. Accordingly, sausage links, such as the link 17', are ejected along an airborne path and onto alignment means 25.

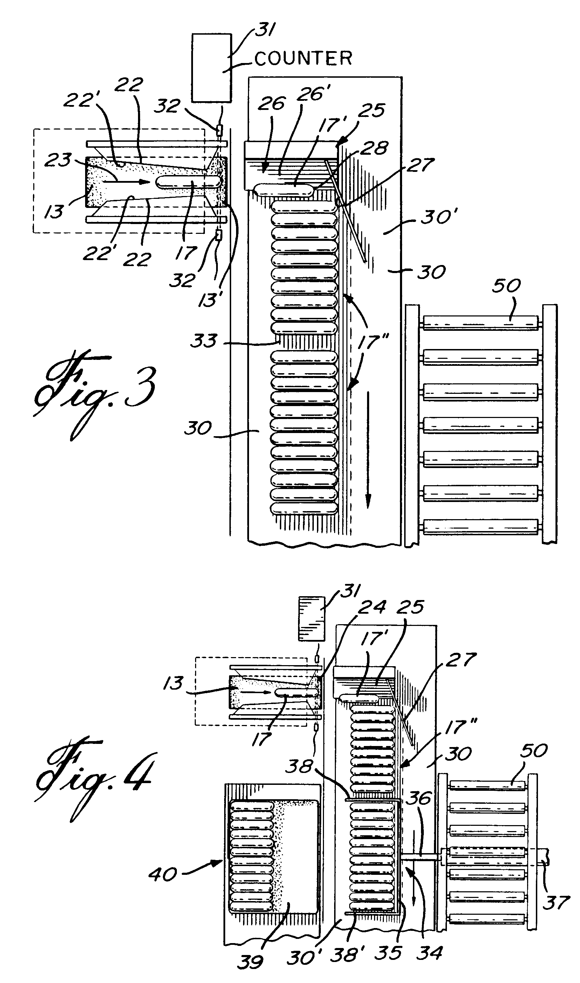

The alignment means 25 is an important part of the machine and is comprised of a side deflector plate 26 which is positioned on the ejecting path and has a sloped deflecting surface 26' sloping toward the direction of travel of a main conveyor 30 and as indicated by arrow 31. The alignment means is also comprised of a stopper plate 27 which is positioned adjacent the deflector plate 26 at a predetermined angle to cause the sausage links 17 to align themselves in side-by-side relationship, as shown at 17''. Figure 3 illustrates more clearly the angular relationship and the construction of the alignment means 25.

Referring additionally to Figure 3, it can be seen that as the sausage link 17' strikes the sloped deflecting surface 26' of the deflector plate 26, its velocity is arrested and the sausage falls downwardly along the sloped deflecting surface 26' toward the stopper plate 27. Accordingly, the front end portion 28 of the sausage link, which is slightly open, will strike into the lower corner of the stopper plate and compact itself while forming a blunt end whereby to facilitate packaging by maintaining the links substantially the same length. The links are then deposited by gravity onto the top surface 30' of the main conveyor 30 and be conveyed therefrom. Accordingly, all of the links are assembled in side-by-side relationship as shown at 17'' and the foodstuff is prevented from falling out of the casing because of the arresting wall provided by the stopper plate. Also, the sloped surface 26' provides arresting friction to slow down the sausage link so it doesn't hit the stopper plate at a high velocity but provides for the link to be gently deposited against the stopper plate.

As is better seen in Figure 3, the guide plates 22 are positioned spaced apart from one another on a respective side of the feed conveyor 13 and are provided with angulated vertical guide surfaces 22'. It is conceivable that only one of these guide plates may be provided as the links are usually deposited by the link forming machine in substantially axial alignment with the machine direction of the conveyor 13. A counter 31 is also mounted adjacent the output end 13' of the feed conveyor 13 and optical detecting devices 32 are connected thereto and aligned with the outlet end 13' whereby to detect individual ones of the sausage links 17 being ejected by the feed conveyor. The counter 31 is connected to the control circuit 21 to provide input signals thereto so that the control circuit may momentarily stop the feed conveyor after a predetermined number of sausage links have been ejected so as to provide the spacing 33 between the groups of sausages 17'' as shown in Figure 3.

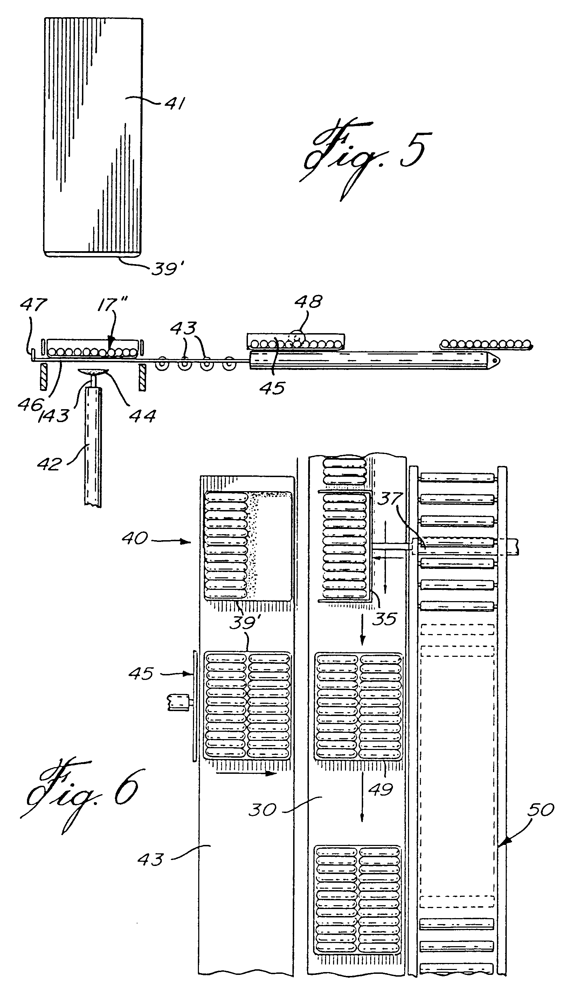

Referring now additionally to Figures 3 to 6, it can be seen that as the groups of sausage links 17'' move downstream on the main conveyor 30 that these groups of sausage links arrive at a transfer station 34 where there is herein provided a piston actuated pusher plate 35 connected to the end of the piston rod 36 of piston 37. The pusher plate 35 may be provided with side walls 38 or at least the side wall or a guide wall on the downstream side of the conveyor 30, namely guide wall 38', to momentarily arrest the sausage links on the main conveyor during the transfer thereof. It is pointed out that the main conveyor is provided with a top surface 30' which has a low coefficient of friction and is treated with a sanitary material. Accordingly, the pusher plate 35 transfers a group of sausage links 17'', oriented in a side-by-side fashion as shown in Figure 4, transversely onto a package support means which could be a tray or the lower wall of a box, as illustrated at 39 at a packaging station 40. This transfer is effected very quickly so that the pusher plate can come back to its initial position before the first sausage link of the next group of sausage links 17'' arrive at the transfer station 34. Alternatively, in the retracting stroke, the pusher plate may be lifted above the path of travel of the groups of sausage links not to interfere with them and then down to position itself close to the conveying surface of the main conveyor to push the next group of sausage links onto the box or tray surface 39. As shown in Figure 4, the box support surface 39 can accept two groups of sausage links in side-by-side relationship. The pusher plates 35 are operated by foot switches or automatically by sensors (not shown) which detect the sausage groups 17''.

Figures 5 and 6 illustrate another embodiment whereby to package the groups of sausage links 17'' onto a plastic foam tray, as is well known in the art. In order to do this, a tray holder 41 is disposed above the packaging station 40 and a pick-up cylinder 42 is positioned in alignment below the tray holder and below a roller conveyor 43 or table and positioned adjacent the main conveyor 30 (see Fig. 6). The pick-up cylinder has a piston rod 143, the end of which is provided with a suction cup 44 which in a pick-up stroke extends through a hole in the roller conveyor 43 onto the lower one of the trays 39' on the tray holder 41 and retains it by vacuum pressure applied to the cup in a well known fashion. Accordingly, the tray 39' is brought down to a loading position and held there by the vacuum while it is being loaded by the pusher plate 35, as described with reference to Figure 4. After the loading of the group of sausage links 17'' onto the tray 39', the suction is removed and the tray is displaced to a repositioning station 45 by means of a transfer piston rod 46, herein schematically illustrated. The piston rod 46 has a retracting plate 47 at an end thereof which will draw the loaded tray to the station 45 where a further cylinder 48 is actuated to push the tray 39' back onto the main conveyor 30, such as at position 49 as indicated in Figure 6. The tray with the sausage links is then conveyed downstream for film wrapping and weighing. A roller conveyor 50 may be positioned adjacent the main conveyor 30 and on which accessories or defective products may be positioned.

It is pointed out that with the present invention, very few operators are required to package the sausage links onto trays or into boxes and the operators serve primarily a supervising function. As shown in Figure 2, an operator may be provided such as at 51 whereby to transfer the filled casings 15 onto the link forming machine 14. It is pointed out that these casings 15 may have a length of some eighty feet. A casing forming machine 52 is preferably positioned adjacent the casing support plate 53 where the operator 51 is located. Because the machine of the present invention is mounted on casters, it can be conveniently located anywhere. It can also be utilized in a semi-automatic mode of operation wherein operators 54 may be positioned along the main conveyor 30 with each operator selecting a specific group of sausage links and placing same into trays 39 positioned in front of them. Once the trays 39 are filled with sausage links, they are then positioned on the roller conveyor 50 or another conveyor to convey the trays to a wrapping and weighing station. A transfer pusher plate 35 could alo be located adjacent each of the manual packaging stations 40 and operate as previously described.

It is within the ambit of the present invention to cover any obvious modifications of a preferred embodiment, provided such modifications fall within the scope of the appended claims.

## Claims

1. A sausage link handling and packaging machine (10), said machine comprising
- a feed conveyor (13) for receiving individual sausage links from a link forming machine (14) and transferring sane onto a main conveyor (30),
- guide means (22) associated with said feed conveyor (13) to orient said sausage links (17') on an ejecting path,
- alignment means (25) at a receiving end of said main conveyor (30) for orienting said sausage links (17) in a side-by-side transverse aligned relationship on said main conveyor, comprising a stopper plate (27) for stopping the movement of the sausage links in the ejecting direction,
- transfer means (35 to 37) at a transfer station (34) of said main conveyor for transferring a predetermined number of said transversely aligned sausage links (17'') off said main conveyor (30) and onto package support means (39, 39'), and
- means (46) to further convey said package support means with said sausages (17'') downstream of said transfer station (34),
**characterized** in that
- the alignment means comprises a side deflector plate (26) positioned in said ejecting path and having a sloped deflecting surface sloping toward the direction of travel of a conveyor belt of said main conveyor,
- the stopper plate is positioned adjacent said deflector plate (26) at a predetermined angle to cause said sausage links (17') to align themselves in said side-by side relationship and is angled toward said ejection path to deflect and guide a front end of said sausages (17') ejected on said deflector plate downwards toward said conveyor belt.

2. A sausage link handling and packaging machine (10) as claimed in claim 1 wherein said guide means (22) is comprised by at least one angled guide plate supported above said feed conveyor (13) at least adjacent an output end thereof for orienting said sausage links (17) axially with respect to the conveying direction along said ejecting path.

3. A sausage link handling and packaging machine (10) as claimed in claim 2 wherein there are two of said angled guide plates (22) positioned spaced from one another on a respective side of said feed conveyor (13) said guide plates (22) having vertical guide surfaces which are closer to one another at said output end.

4. A sausage link handling and packaging machine (10) as claimed in any of claims 1 to 3 wherein there is further provided counter means (31) disposed at said output end of said feed conveyor (13) to count the number of sausage links (17') ejected by said feed conveyor.

5. A sausage link handling and packaging machine (10) as claimed in claim 4 wherein said counter means (31) has a detector for detecting the passage of each sausage link (17'), said detector being connected to a counter device, and a control circuit to monitor said counter device (31) and control the operation of said feed conveyor (13) so as to interrupt the ejection of sausage links (17') whereby to form separated groups of sausage links (17'') on said main conveyor.

6. A sausage link handling and packaging machine as claimed in any of claims 1 to 5 wherein said transfer means (35 to 37) is a piston actuated pusher plate (35) positioned adjacent said main conveyor (30) at said transfer station (34) to push said predetermined number of sausage links (17'') transversely off said main conveyor (30), transfer guide means (38') positionable at least to one side of a downstream one of said predetermined number of sausage links (17'') to momentarily arrest said links on said main conveyor (30) during the transfer thereof.

7. A sausage link handling and packaging machine (10) as claimed in any of claims 1 to 6 wherein said package support means (38') is the bottom wall of a box.

8. A sausage link handling and packaging machine as claimed in any of claims 1 to 7 wherein said package support means (39) is a tray, a plurality of said trays being positioned in a storage holder (41) adjacent said main conveyor (30) at said transfer station.

9. A sausage link handling and packaging machine (10) as claimed in claim 8 wherein said storage holder (41) is positioned above a loading position adjacent said transfer station, and vacuum pick-up means (42) are provided to transfer one of said trays (39') from said storage holder (41) to said loading position.

10. A sausage link handling and packaging machine (10) as claimed in any of claims 1 to 9, wherein said means (46) to further convey said package support means (39) is comprised by said main conveyor (30) and means (48) to locate said package support means with said predetermined number of sausage links (17'') onto said main conveyor (30).

## Patentansprüche

1. Wursthandhabungs- und Verpackungsmaschine (10), wobei die Maschine umfaßt
- eine Zuführfördereinrichtung (13) zur Aufnahme einzelner Würste von einer Wurstformmaschine (14) und zu deren Übergabe auf eine Hauptfördereinrichtung (30) ,
- eine mit der Zuführfördereinrichtung (13) verbundene Führungseinrichtung (22) zur Orientierung der Würste (17') auf einem Ausstoßweg,
- eine Ausrichtungseinrichtung (25) an einem Aufnahmeende der Hauptfördereinrichtung (30) zur Orientierung der Würste (17) in einer nebeneinander quer ausgerichteten Beziehung auf der Hauptfördereinrichtung, umfassend eine Anschlagplatte (27) zum Stoppen der Bewegung der Würste in der Ausstoßrichtung,
- eine Übergabeeinrichtung (35 bis 37) an einer Übergabestation (34) der Hauptfördereinrichtung zur Übergabe einer vorbestimmten Anzahl der quer ausgerichteten Würste (17'') fort von der Hauptfördereinrichtung (30) und auf eine Verpackungsunterstützungseinrichtung (39, 39') und
- eine Einrichtung (46), um die Verpackungsunterstützungseinrichtung mit den Würsten (17'') stromabwärts der Übergabestation (34) weiter zu fördern,
dadurch **gekennzeichnet,** daß
- die Ausrichtungseinrichtung eine Seitenumlenkplatte (26) umfaßt, die in dem Ausstoßweg positioniert ist und eine abgeschrägte Umlenkfläche aufweist, die zur Bewegungsrichtung eines Förderbands der Hauptfördereinrichtung hin abgeschrägt ist,
- die Anschlagplatte benachbart der Umlenkplatte (26) in einem vorbestimmten Winkel angeordnet ist um zu bewirken, daß sich die Würste (17') selbst in der nebeneinanderliegenden Beziehung ausrichten, und zu dem Ausstoßweg hin abgewinkelt ist, um ein vorderes Ende der auf die Umlenkplatte ausgestoßenen Würste (17') umzulenken und nach unten zu dem Förderband zu führen.

2. Wursthandhabungs- und Verpackungsmaschine (10) nach Anspruch 1, bei der die Führungseinrichtung (22) zu mindestens einer abgewinkelten Führungsplatte gehört, die oberhalb der Zuführfördereinrichtung (13) mindestens benachbart einem Ausstoßende von dieser gehaltert ist, um die Würste (17) in bezug auf die Förderrichtung entlang des Ausstoßwegs axial zu orientieren.

3. Wursthandhabungs- und Verpackungsmaschine (10) nach Anspruch 2, bei der zwei abgewinkelte Führungsplatten (22) vorhanden sind, die auf einer entsprechenden Seite der Zuführfördereinrichtung (13) mit Abstand voneinander angeordnet sind, wobei die Führungsplatten (22) vertikale Führungsflächen aufweisen, die am Ausstoßende dichter beieinander liegen.

4. Wursthandhabungs- und Verpackungsmaschine (10) nach einem beliebigen der Ansprüche 1 bis 3, bei der weiter eine Zählereinrichtung (31) vorgesehen ist, die am Ausstoßende der Zuführfördereinrichtung (13) angeordnet ist, um die Anzahl der durch die Zuführfördereinrichtung ausgestoßenen Würste (17') zu zählen.

5. Wursthandhabungs- und Verpackungsmaschine (10) nach Anspruch 4, bei der die Zählereinrichtung (31) einen Detektor zur Erfassung des Durchgangs jeder Wurst (17') aufweist, wobei der Detektor mit einer Zählereinrichtung und einem Kontrollkreis verbunden ist, um die Zählereinrichtung (31) zu überwachen und den Betrieb der Zuführfördereinrichtung (13) zu kontrollieren, um den Ausstoß von Würsten (17') zu unterbrechen, um hierdurch getrennte Gruppen von Würsten (17'') auf der Hauptfördereinrichtung zu bilden.

6. Wursthandhabungs- und Verpackungsmaschine nach einem beliebigen der Ansprüche 1 bis 5, bei der die Übergabeeinrichtung (35 bis 37) eine kolbenbetätigte Schiebeplatte (35) ist, die benachbart der Hauptfördereinrichtung (30) an der Übergabestation (34) angeordnet ist, um die vorbestimmte Anzahl von Würsten (17'') von der Hauptfördereinrichtung (30) in Querrichtung fortzuschieben, wobei eine Übergabeführungseinrichtung (38') mindestens zu einer Seite einer stromabwärtigen der vorbestimmten Anzahl von Würsten (17'') positionierbar ist, um die Würste während deren Übergabe auf der Hauptfördereinrichtung (30) vorübergehend anzuhalten.

7. Wursthandhabungs- und Verpackungsmaschine (10) nach einem beliebigen der Ansprüche 1 bis 6, bei der die Verpackungsunterstützungseinrichtung (38') die Bodenwand eines Behälters ist.

8. Wursthandhabungs- und Verpackungsmaschine nach einem beliebigen der Ansprüche 1 bis 7, bei der die Verpackungsunterstützungseinrichtung (39) eine Ablageplatte ist, wobei eine Anzahl der Ablageplatten in einer Aufbewahrungshaltevorrichtung (41) benachbart der Hauptfördereinrichtung (30) an der Übergabestation angeordnet ist.

9. Wursthandhabungs- und Verpackungsmaschine (10) nach Anspruch 8, bei der die Aufbewahrungshaltevorrichtung (41) oberhalb einer Beschickungsposition benachbart der Übergabestation angeordnet ist und Vakuumaufnahmeeinrichtungen (42) vorgesehen sind, um eine der Ablageplatten (39') aus der Aufbewahrungshaltevorrichtung (41) zu der Beschickungsposition zu übergeben.

10. Wursthandhabungs- und Verpackungsmaschine (10) nach einem beliebigen der Ansprüche 1 bis 9, bei der die Einrichtung (46) zur weiteren Förderung der Verpackungsunterstützungseinrichtung (39) in der Hauptfördereinrichtung (30) und einer Einrichtung (48) enthalten ist, um die Verpackungsunterstützungseinrichtung mit der vorbestimmten Anzahl von Würsten (17'') auf der Hauptfördereinrichtung (30) anzuordnen.

## Revendications

1. Machine (10) de manipulation et d'emballage de saucisses en chapelets, ladite machine comprenant:
- un convoyeur d'amenée (13) pour recevoir des chapelets individuels de saucisses provenant d'une machine (14) de fabrication de chapelets et les transférer sur un convoyeur principal (30) ,
- un moyen de guidage (22) associé audit convoyeur d'amenée (13) pour orienter lesdits chapelets de saucisses (17') sur un trajet d'éjection,
- un moyen d'alignement (25) placé à l'extrémité de réception dudit convoyeur principal (30) pour orienter lesdits chapelets de saucisses (17) afin qu'ils soient alignés transversalement côte à côte sur ledit convoyeur principal, comprenant une plaque d'arrêt (27) pour arrêter le déplacement des chapelets de saucisses dans la direction d'éjection,
- des moyens de transfert (35 à 37) placés au niveau d'un poste de transfert (34) dudit convoyeur principal pour transférer un nombre prédéterminé desdits chapelets de saucisses alignés transversalement (17'') dudit convoyeur principal (30) sur des moyens (39, 39') formant support d'emballage, et
- un moyen (46) pour acheminer en outre lesdits moyens formant supports d'emballage avec lesdites saucisses (17'') vers l'aval dudit poste de transfert (34),
caractérisée en ce que:
- le moyen d'alignement comprend une plaque déflectrice latérale (26) placée dans ledit trajet d'éjection et présentant une surface déflectrice inclinée, inclinée en direction du déplacement de la courroie de convoyeur dudit convoyeur principal,
- la plaque d'arrêt est placée adjacente à ladite plaque déflectrice (26) suivant un angle prédéterminé pour amener lesdits chapelets de saucisses (17') à s'aligner d'eux-mêmes dans ladite position côte à côte et fait un angle en direction dudit trajet d'éjection pour dévier et guider vers le bas l'extrémité antérieure desdites saucisses (17') éjectées sur ladite plaque déflectrice, en direction de ladite courroie de convoyeur.

2. Machine (10) de manipulation et d'emballage de saucisses en chapelets selon la revendication 1, dans laquelle ledit moyen de guidage (22) comprend au moins une plaque de guidage inclinée supportée au-dessus dudit convoyeur d'amenée (13), adjacente au moins à une extrémité de sortie de celui-ci, pour orienter lesdits chapelets de saucisses (17) axialement par rapport à la direction d'acheminement le long dudit trajet d'éjection.

3. Machine (10) de manipulation et d'emballage de saucisses en chapelets selon la revendication 2, dans laquelle il y a deux plaques de guidage inclinées (22), espacées l'une de l'autre, sur un côté respectif dudit convoyeur d'amenée (13), lesdites plaques de guidage (22) ayant des surfaces de guidage verticales qui sont plus proches l'une de l'autre au niveau de ladite extrémité de sortie.

4. Machine (10) de manipulation et d'emballage de saucisses en chapelets selon l'une quelconque des revendications 1 à 3, dans laquelle il y a en outre un moyen formant compteur (31) placé à l'extrémité de sortie dudit convoyeur d'amenée (13) pour compter le nombre de chapelets de saucisses (17') éjectés par ledit convoyeur d'amenée.

5. Machine (10) de manipulation et d'emballage de saucisses en chapelets selon la revendication 4, dans laquelle ledit moyen formant compteur (31) comprend un détecteur pour détecter le passage de chaque chapelet de saucisses (17') , ledit détecteur étant raccordé à un dispositif de comptage, et un circuit de commande pour surveiller ledit dispositif de comptage (31) et commander le fonctionnement dudit convoyeur d'amenée (13) afin d'interrompre l'éjection des chapelets de saucisses (17') pour former de ce fait des groupes séparés de chapelets de saucisses (17'') sur ledit convoyeur principal.

6. Machine de manipulation et d'emballage de saucisses en chapelets selon l'une quelconque des revendications 1 à 5, dans laquelle lesdits moyens de transfert (35 à 37) sont une plaque-poussoir (35) actionnée par piston, placée adjacente audit convoyeur principal (30) au niveau dudit poste de transfert (34) pour pousser ledit nombre prédéterminé de chapelets de saucisses (17'') transversalement hors dudit convoyeur principal (30), un moyen de guidage de transfert (38') pouvant être placé sur un côté au moins du chapelet de saucisses placé en aval dudit nombre prédéterminé de chapelets de saucisses (17'') pour arrêter momentanément lesdits chapelets sur ledit convoyeur principal (30) pendant leur transfert.

7. Machine (10) de manipulation et d'emballage de saucisses en chapelets selon l'une quelconque des revendications 1 à 6, dans laquelle ledit moyen (38') formant support d'emballage est la paroi de fond d'une boîte.

8. Machine de manipulation et d'emballage de saucisses en chapelets selon l'une quelconque des revendications 1 à 7, dans laquelle ledit moyen (39) formant support d'emballage est un plateau, une pluralité desdits plateaux étant placés dans un porte-plateaux (41) de stockage adjacent audit convoyeur principal (30) au niveau dudit poste de transfert.

9. Machine (10) de manipulation et d'emballage de saucisses en chapelets selon la revendication 8, dans laquelle ledit porte-plateaux (41) est placé au-dessus d'une position de chargement adjacente audit poste de transfert, et des moyens de saisie par aspiration (42) sont prévus pour transférer l'un desdits plateaux (39') dudit porte-plateaux (41) à ladite position de chargement.

10. Machine (10) de manipulation et d'emballage de saucisses en chapelets selon l'une quelconque des revendications 1 à 9, dans laquelle ledit moyen (46) pour acheminer en outre lesdits moyens (39) formant support d'emballage est constitué par ledit convoyeur principal (30) et un moyen (48) pour positionner lesdits moyens formant support d'emballage avec ledit nombre prédéterminé de chapelets de saucisses (17'') sur ledit convoyeur principal (30).
